# EUROPÄISCHE PATENTSCHRIFT

(11) **EP 1 432 605 B1**
(45) Veröffentlichungstag und Bekanntmachung des Hinweises auf die Patenterteilung: **21.06.2006**
(21) Anmeldenummer: 02777126.0
(22) Anmeldetag: 17.09.2002
(51) Int. Cl.: B62D 25/04, B62D 29/00, B22D 19/02

(54) **GEGOSSENES TRÄGERELEMENT FÜR FAHRZEUGKAROSSERIE**
CAST CARRIER ELEMENT FOR A VEHICLE BODY
ELEMENT SUPPORT COULE POUR CARROSSERIE DE VEHICULE

(30) Priorität: 05.10.2001 DE 10149244
(43) Veröffentlichungstag der Anmeldung: 30.06.2004
(73) Patentinhaber: DaimlerChrysler AG, 70567 Stuttgart (DE)
(72) Erfinder: BEHR, Thomas, 89275 Elchingen (DE); EIPPER, Konrad, 72108 Rottenburg (DE); FUSSNEGGER, Wolfgang, 72074 Tübingen (DE); GERICK, Arndt, 89079 Ulm (DE); KLEINEKATHÖFER, Wolfgang, 73550 Waldstetten (DE); MINNICH, Daniel, 89081 Ulm (DE); SCHEFFZÜK, Matthias, 72070 Tübingen (DE)
(74) Vertreter: Rauscher, Steffen
(86) Internationale Anmeldenummer: PCT/EP2002/010408
(87) Internationale Veröffentlichungsnummer: WO 2003/031252

(56) Entgegenhaltungen:
- EP-A- 0 686 543
- EP-A- 1 138 581
- EP-A- 1 174 200
- DE-A- 19 650 613
- DE-A- 19 937 375
- DE-U- 20 209 293
- BANHART J ET AL: "ALUMINIUMSCHAUM - ENTWICKLUNGEN UND ANWENDUNGSMOEGLICHKEITEN" INGENIEUR WERKSTOFFE, SPRINGER VDI VERLAG, DUSSELDORF, DE, Bd. 7, Nr. 1, April 1998 (1998-04), Seiten 43-45, XP000800267 ISSN: 0935-5715

## Beschreibung

Die Erfindung betrifft ein Trägerelement für eine Fahrzeugkarosserie nach Anspruch 1.

Trägerelemente von Fahrzeugkarosserien sind in der Regel aus Blechen mit konstanter Wandstärke aufgebaut. Häufig werden diese Bleche in Halbschalen geformt und mehrere Halbschalen zu einem Trägerelement oder Strukturelement verschweißt. Im Falle der A-Säulen von Kraftfahrzeugen, insbesondere von Cabriolets, ist die Festigkeit des Trägerelementes bei einem überschlag oftmals nicht hoch genug, um einen ausreichenden Überlebensraum der Insassen zu gewährleisten.

Zur Gewährleistung der Crashsicherheit werden die Dachsäulen, insbesondere die A-Säule von Cabriolets, mit einem Stahlrohr, das im Zentrum der Säule verläuft, verstärkt. Gattungsbildend ist eine derartige A-Säule in der DE 40 16 730 C2 beschrieben.

Im Zuge eines umfassenden Leichtbaubestrebens im Automobilbau ist man zunehmend bemüht, auch bei tragenden Teilen Gewicht einzusparen. In einem Zeitungsartikel (mot 9/2001, S.64) wird eine Studie eines Fahrzeuges mit einer A-Säule dargestellt, die zwei Streben umfasst, die über ein zweidimensionales Zick-Zack-Profil verbunden sind. Diese Bauweise bietet zwar ein hohes Potential an Gewichtseinsparung, die Crashsicherheit ist Jedoch durch diese einfache Zick-Zack-Struktur nicht gewährleistet, da sie insbesondere für einen Seitenaufprall keine geeignete Verstärkung aufweist.

Gegossene Tragelemente wie beispielsweise A-Säulen, die im Hohlraum verstärkt sind, sind in der DE 199 37 375, der DE 196 50 613, der EP 1 138 581 A2 sowie in einem Artikel der Ingenieur-Werkstoffe, 7 (1998) Nr. 1, S. 43 beschrieben.

Die Aufgabe der Erfindung besteht darin, ein Tragelement bereitzustellen, das gegenüber dem Stand der Technik ein niedrigeres Gewicht bei gleicher oder verbesserter Festigkeit aufweist.

Die Lösung der Aufgabe besteht in den Merkmalen des Anspruchs 1.

Das erfindungsgemäße Trägerelement nach Anspruch 1 ist aus gegossenem Eisen dargestellt. Der Vorteil gegenüber den herkömmlichen, im Fahrzeug-Karosseriebau verwendeten Stahlblechen besteht darin, dass bei Strukturen aus gegossenem Eisen die Materialstärke den auftretenden Kräften angepasst werden kann. So ist es möglich, durch Belastungssimulationen die Bereiche mit den höchsten mechanischen Belastungen zu ermitteln und an diesen das Material zu verstärken. An Bereichen mit geringer Belastung kann hingegen Material eingespart werden. Durch Optimierung dieser Methode kann bei einem Trägerelement mit selber Funktionsweise eine Gewichtseinsparung von über 50% gegenüber einer Stahlblechkonstruktion erzielt werden.

Gegenüber einer Konstruktion aus Aluminiumguss besteht der Vorteil der Erfindung in der höheren Festigkeit und höheren Dehnung der Eisenwerkstoffe gegenüber den Aluminium-Gusswerkstoffen. Durch die beschriebene Materialverlagerung und Materialeinsparung können Trägerelemente dargestellt werden, die bei gleicher Funktion eine ähnliche Masse wie Aluminium-Gussbauteile aufweisen, dafür jedoch wesentlich höher mechanisch belastbar sind.

Das Trägerelement ist in einen Hohlraum mit einem Kern aus Hohlkugeln gefüllt. Die Hohlkugeln führen als Kernmaterial zu einer Steigerung der mechanischen Festigkeit, wobei sie das Gewicht des Trägerelementes nur unwesentlich erhöhen. Die Hohlkugeln tragen zudem zu Verbesserung der Dämpfung von Karosserieschwingungen bei.

Das Trägerelement nach Anspruch 2 umfasst wenigstens ein gegossenes Schalenelement, das im Wesentlichen aus Streben dargestellt ist. Besteht das Trägerelement aus mehreren Schalenelementen, so sind diese zu dem Trägerelement zusammengefügt und bilden eine Fachwerkkonstruktion, die einen Hohlraum umgeben. Bei Verwendung eines Schalenelementes kann dieses mit dem Trägerelement identisch sein. Der Hohlraum wird von der Fachwerkkonstruktion umgeben und weist in der Regel keine geschlossene Oberfläche auf. Die Streben des Trägerelementes sind derart angeordnet, dass bei einer Zugbelastung einer Strebe mindestens eine korrespondierende Strebe gleichermaßen auf Druck belastet wird.

Das Trägerelement enthält bevorzugt mindestens drei Längsstreben, die den Hohlraum bilden. Die Längsstreben sind durch mehrere Querstreben so verbunden, dass jeweils Zug-und Druckbelastungen ausgeglichen werden. In der Regel verlaufen die Querstreben jeweils zwischen benachbarten Längsstreben, sie können jedoch auch durch den Hohlraum zu gegenüberliegenden Längsstreben verlaufen wenn die mechanische Beanspruchung dies erfordert.

In einer weiteren Ausgestaltungsform nach Anspruch 3 ist das Trägerelement ebenfalls aus mindestens einem Schalenelement aufgebaut. Dieses Schalenelement weist eine über weite Teile geschlossene Oberfläche auf. Die Oberfläche des Schalenelementes ist in Richtung einer konkaven Wölbung des Schalenelementes mit Streben versehen. Die Streben sind bevorzugt in Form von Rippen ausgebildet. Die Oberfläche kann zur Materialeinsparung in dieser Ausgestaltungsform an mechanisch gering belasteten Bereichen sehr dünne Wandstärken oder Löcher aufweisen. Die Wirkungsweise dieser Ausgestaltung der Erfindung ist analog der Fachwerkkonstruktion, so dass durch die Verstrebungen im Hohlraum eine Zugbelastung durch eine analoge Druckbelastung ausgleichbar ist.

Bevorzugt weist die Wandstärke des Trägerelementes an der Oberfläche oder den Streben oder Rippen eine Dicke auf, die kleiner ist als 3 mm. Durch derartige Wandstärken wird das Gewicht des Trägerelementes bei Gewährleistung einer ausreichenden Festigkeit reduziert.

Die Hohlkugeln sind untereinander verbunden, wodurch ihre Festigkeitssteigernde Wirkung noch erhöht wird.

Nicht Bestandteil der Erfindung ist ein Verfahren zur Herstellung des erfindungsgemäßen Trägerelementes nach Anspruch 1 oder eines Trägers mit Kern aus Eisenschaum.

Hiernach werden Schalenelemente zur Darstellung des erfindungsgemäßen Trägerelementes in einer Sandform abgegossen. Die Sandform umfasst mehrere Teilkerne. Mindestens einer der Teilkerne besteht aus metallischen Hohlkugeln oder einem Eisenschaum. Die Sandform wird mit einer Eisenlegierung ausgegossen, wobei mindestens der eine innere Teilkern durch die Eisenlegierung umgossen wird und als Verstärkungselement im Trägerelement verbleibt.

Zur Durchführung des erfindungsgemäßen Verfahrens sind verschieden Gießverfahren und Wärmebehandlungsverfahren zweckmäßig. Bevorzugte Verfahren sind der Stahlguss, der Sphäroguss oder der Temperguss. Auslagerungen bzw. Wärmebehandlungen zu bainitisch gehärtetem Eisen oder dem sogenannten austenitisch duktilen Eisen (ADI) sind ebenfalls zweckmäßig.

Im Folgenden werden besonders bevorzugte Ausgestaltungsformen an Hand der Figuren 1 bis 3 näher erläutert.

Es zeigen:
- **Fig. 1**: ein Trägerelement mit einer Fachwerkstruktur,
- **Fig. 2**: ein Trägerelement mit Verstrebungen in einem Hohlraum,
- **Fig. 3a-3c**: Ausschnitte aus einer Oberfläche eines Trägerelementes mit einer Lochstruktur.
- **Fig. 4**: einen vergrößerten Ausschnitt des Trägerelementes aus Fig. 1, gefüllt mit Hohlkugeln,
- **Fig. 5**: einen Ausschnitt des Trägerelementes aus Fig. 2, gefüllt mit Hohlkugeln.

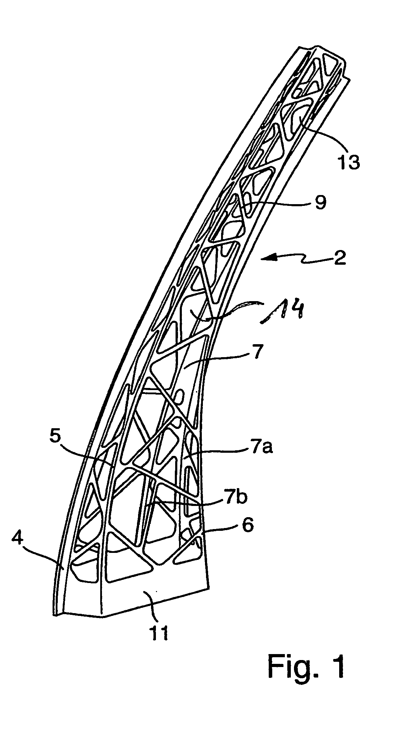

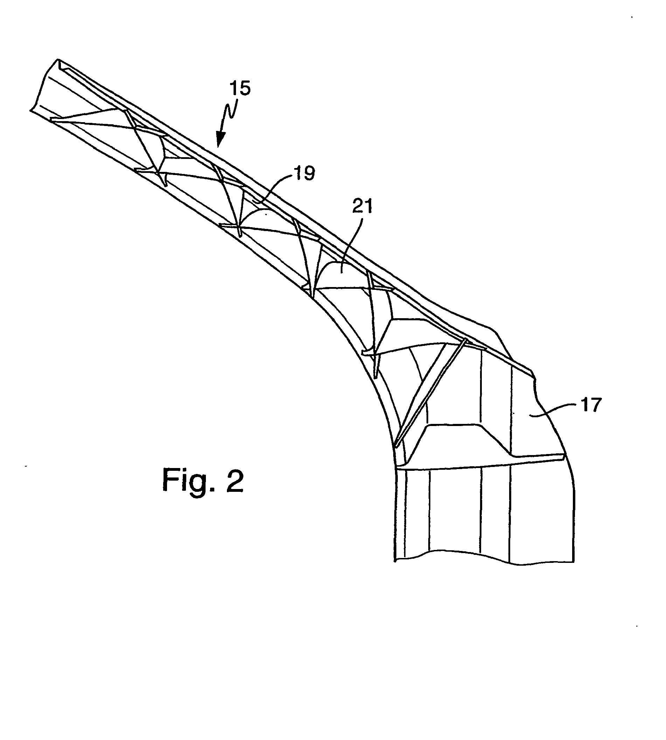

Das in **Fig. 1** dargestellte Trägerelement 2 ist in Form einer A-Säule eines Kraftfahrzeuges ausgestaltet. Zur besseren Darstellbarkeit des Trägerelementes sind die erfindungsgemäß eingelagerten Hohlkugeln in den Trägerelementen der Figuren 1 und 2 nicht abgebildet.

Das Trägerelement in Fig. 1 weist vier Längsstreben 4-7 auf, wobei sich die Längsstrebe 7 im unteren Bereich verzweigt (7a und 7b). Das Trägerelement 2 besteht aus einem Schalenelement, das in diesem Fall mit dem Trägerelement 2 identisch ist. Die Längsstreben 4-7 und 7a,b sind durch Querstreben 9 verbunden. Gemeinsam ergeben die Längsstreben 4-7, 7a,b und die Querstreben 9 eine Fachwerkstruktur, die die Oberfläche des Trägerelementes bildet, in weiten Bereichen jedoch offen ist.

Das Trägerelement 2 weist im Sockelbereich eine umlaufende Querstrebe 11 auf, die deutlich breiter ausgebildet ist als die übrigen Querstreben 9. Die Querstrebe 11 ist als exemplarisch anzusehen, ebenso sind bei entsprechenden Belastungsfällen die übrigen Längs- bzw. Querstreben 4-7, 7a,b, 9, 13 breiter bzw. dicker auszuführen. Dies führt dazu, dass eventuell die Öffnungen 13 in der Fachwerkstruktur entsprechend kleiner werden. Die Fachwerkstruktur umfasst einen Hohlraum 14.

Im Einsatz im Kraftfahrzeug wird das Trägerelement 2 in der Regel mit einer Beplankung versehen sein. Die Beplankung kann aus dünnen Metallblechen, flächigen Kunststoffteilen, Glas- oder Plexiglasscheiben bestehen. Beim Einsatz von transparenten Materialien besteht der Vorteil, dass die Säule teilweise durchsichtig ist, was zur Verbesserung des Sichtfeldes beiträgt.

Die in **Fig. 2** dargestellte Halbschale 15 ist als Teil einer A-Säule ausgestaltet. Sie weist in dieser Ausgestaltungsform eine geschlossen Oberfläche 17 auf, die in konkaver Wölbung einen Hohlraum 19 umgibt. Der Hohlraum 19 (der mit hier nicht dargestellten Hohlkugeln gefüllt ist) ist von Streben durchzogen, die in Fig. 2 als Rippen 21 ausgebildet sind. Die Rippen 21 stehen über ihre gesamte Länge mit der Oberfläche in Berührung. Eine hier nicht dargestellte zweite Halbschale kann zur vollständigen Umschließung herangezogen werden. Die Halbschale 15 ist jedoch auch als Trägerelement alleine selbsttragend.

Ein weiterer Vorteil von Trägerelementen nach den Figuren 1 und 2 bezüglich der Masseoptimierung besteht darin, dass gegenüber dem herkömmlichen Stand der Technik auf ein zentrales Stahlrohr verzichtet werden kann. Die Massereduktion am Beispiel einer A-Säule nach Figur 1 beträgt gegenüber einer A-Säule herkömmlicher Bauart ca. 55 %.

Die Dicke der Oberfläche und Rippen der Trägerelemente in den Figuren 1 oder 2 beträgt auf Grund der Masseoptimierung bevorzugt weniger als 3 mm. Aus mechanischen Gründen ist es jedoch erforderlich, an ausgewählten Stellen höhere Wanddicken zu gewährleisten. Als Ausgleich besteht jedoch insbesondere bei Halbschalen nach Fig. 2 die Möglichkeit, an weniger belasteten Stellen auf Material zu verzichten. Dies bedeutet entweder dünnere Wandstärken oder Löcher in der Oberfläche 17 bzw. in den Verrippungen 21.

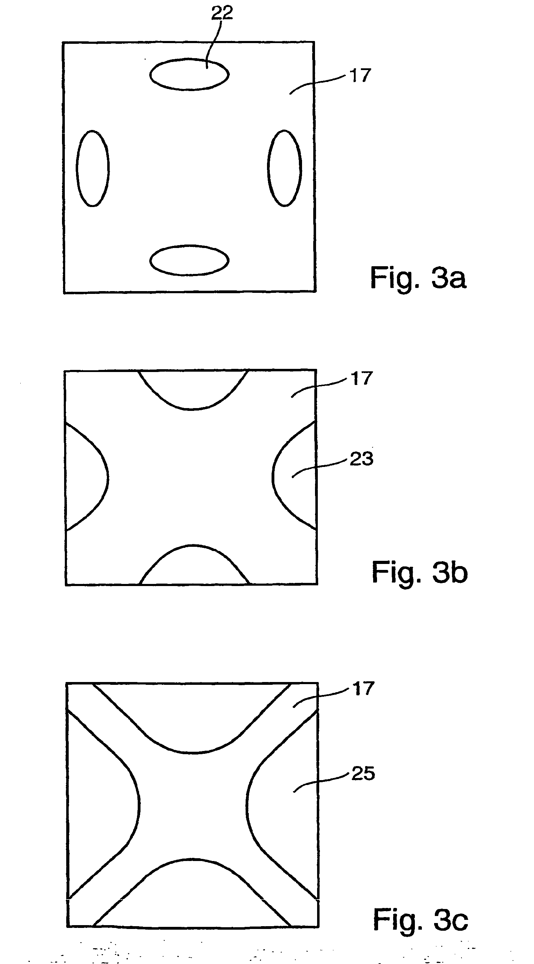

Derartige Abwandlungen der Oberfläche 17 sind in beispielhafter Form in den Figuren 3a bis 3c dargestellt. Die Oberfläche 17 weist Öffnungen 21, 23, 25 auf, wie sie die genannten Fig. 3a bis 3c als Flächenausschnitte offenbaren. Die Öffnungen 21, 23, 25 dienen insbesondere zur Reduzierung der Masse. Die Größe der Öffnungen 21, 23, 25 nimmt von der Fig. 3a zur Fig. 3c hin zu. In Figur 3c ist der Spezialfall einer- zumindest lokalen - Fachwerkstruktur dargestellt. Die Verstrebung der Halbschale 15 kann in allen Fällen auch in Form von hier nicht dargestellten Streben analog der Fig. 1 erfolgen. Gießtechnisch ist jedoch eine Verrippung analog der Rippen 21 vorteilhaft.

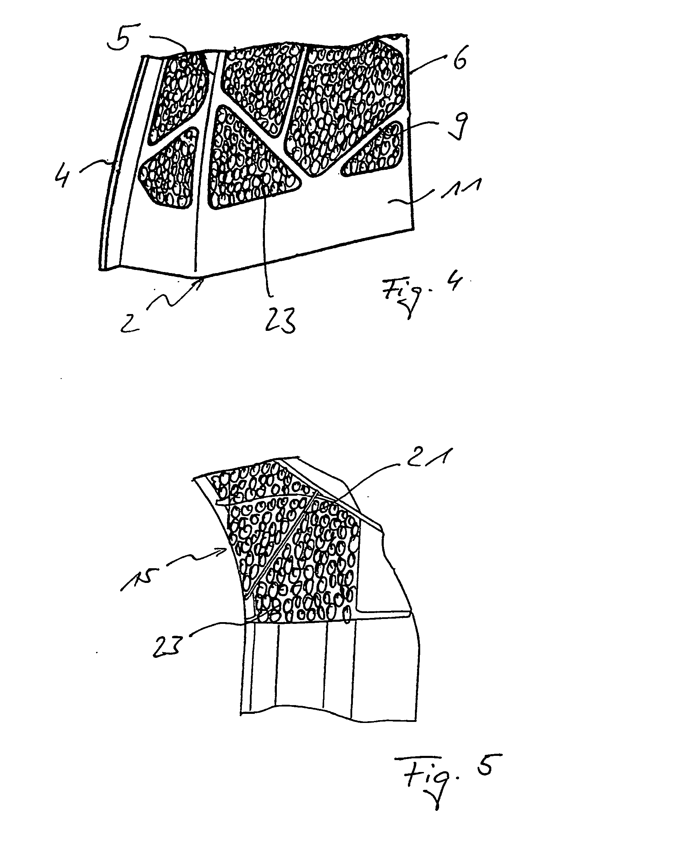

In den Figuren 4 und 5 sind Ausschnitte der Trägerelemente 2 und 15 aus den Figuren 1 und 2 dargestellt. In diesen Darstellungen sind die Trägerelemente 2, 15 mit metallischen Hohlkugeln 23 gefüllt. Durch die metallischen Hohlkugeln 23 wird eine zusätzliche Festigkeitssteigerung bewirkt.

Die Hohlkugeln weisen einen Durchmesser zwischen 0,5 mm und 10 mm auf und sind bevorzugt in einer kubisch dichtesten Kugelpackung angeordnet.

Die Hohlkugeln können zur Steigerung der Packungsdichte eine Verteilung ihrer Durchmesser aufweisen. Bevorzugt ist hierbei eine bimodale Durchmesser-Verteilung vorgesehen.

Es ist ebenfalls möglich den Hohlraum 19 mit einem Metallschaum auf Eisenbasis zu füllen.

Zur Herstellung eines erfindungsgemäßen Trägerelementes wird eine Sandform gefertigt. Im Unterschied zu einer herkömmlichen Sandform wird ein Kernteil, das den Hohlraum 19 ausbildet, aus Hohlkugeln 23 oder einem Eisenschaum dargestellt. Das Trägerelement wird mit einer Eisenlegierung ausgegossen und die äußere Sandform entfernt. Die Hohlkugeln verbleiben im Hohlraum und dienen zur Erhöhung der Steifigkeit der Trägerelementes.

Ein bevorzugtes Verfahren zum Gießen der Schalenelemente ist der Stahlguss, insbesondere im Niederdruckguss bei sehr geringen Wandstärken. Das Material hat einen geringen Kohlenstoffanteil (unter 2%) und ist bei entsprechender Handhabung wie gewalzter Stahl vergütbar. Durch Stahlguss werden Zugfestigkeiten von über 450 N/mm² erzielt, vergütete Stähle können bis zu 1000 N/mm² erzielen.

Ein weiteres bevorzugtes Gießverfahren ist der Sphäroguss, das sogenannte Gusseisen mit Kugelgraphit, das sich wie der Stahlguss durch seine relativ hohe Duktilität auszeichnet und im vergüteten Zustand ebenfalls 1000 N/mm² Zugfestigkeit erreicht. Ein weiteres vorteilhaftes Gießverfahren ist der Niederdruckguss.

Ebenfalls zweckmäßig zur Herstellung eines erfindungsgemäßen Trägerelementes ist der sogenannte Temperguss. Durch Temperaturbehandlungen von ca. 900° C und weiteren chemischen Reaktionen mit Gasen wird dem Gusseisen Kohlenstoff entzogen und das Material somit duktilisiert. Eine Duktilisierung beispielsweise von Sphäroguss kann durch das sogenannte austenitisch duktilisierte Eisen, dem ADI-Verfahren, erfolgen, das ebenfalls einen Glühprozess bei ca. 900°C voraussetzt, dem eine differenzierte Abkühlung auf ca. 380°C folgt, durch die die gewünschte Gefügeausbildung, ein Zwischenstufengefüge aus Kohlenstoff stabilisierten Austenit und Ferrit, gesteuert wird.

Alle Gießverfahren werden bevorzugt im Sandguss mit einem verlorenen Kern durchgeführt, wodurch der Hohlraum innerhalb der Streben oder der Oberfläche ausgebildet werden kann.

Einen weiteren Vorteil weist das erfindungsgemäße Trägerelement bei Fahrzeugen mit besonderen ballistischen Schutz auf. Durch eine vergleichsweise kleine Änderung an den Kernen oder Formen, kann die Wandstärke variiert werden.

Auf diese Weise kann ausgehend von den Anforderung an den ballistischen Schutz gezielt lokal die Wandstärke erhöht werden. Dies kann direkt in der Serienfertigung vorgenommen werden. Das zu panzernde Fahrzeug wird gleich bei der Montage mit dem verstärkten Trägerelement ausgerüstet, eine nachträgliche Demontage ist nicht erforderlich. Zudem können aufwändige Schweißvorgänge vermieden werden. Diesen Möglichkeit des erfindungsgemäßen Trägerelementes trägt erheblich zur Kostensenkung bei.

## Patentansprüche

1. Trägerelement für Fahrzeugkarosserie, insbesondere für Tragsäulen, wobei das Trägerelement aus gegossenem Eisen dargestellt ist,
• und das Trägerelement wenigstens ein gegossenes Schalenelement umfasst,
• das die Außenkontur des Trägerelementes bildet und einen Hohlraum umgibt,
• der Hohlraum mindestens teilweise mit einem Kern aus metallischen Hohlkugeln gefüllt ist.
**dadurch gekennzeichnet ,**
• **dass** ein Kernpaket, das das Trägerelement in einer negativen Form darstellt, mehrere Teilkernen umfasst,
• wobei mindestens ein innerer Teilkern aus Hohlkugeln besteht,
• das Trägerelement mit einer Eisenlegierung, insbesondere im Stahlguss, Sphäroguss oder im Temperguss gegossenen ist,
• wobei der innere Teilkern aus Hohlkugeln durch die Eisenlegierung zumindest teilweise umgossen ist und
• nach einem Entformen im Trägerelement verbleibt.

2. Trägerelement nach Anspruch 1,
**dadurch gekennzeichnet ,**
**dass** die Außenkontur des Trägerelementes in Form einer Fachwerkkonstruktion aufgebaut sind.

3. Trägerelement nach Anspruch 2,
**dadurch gekennzeichnet ,**
**dass** das Trägerelement mindestens drei Längsstreben umfasst, die durch Querstreben miteinander verbunden sind.

4. Trägerelement nach Anspruch 1
**dadurch gekennzeichnet ,**
• **dass** das Schalenelement im Hohlraum durch Verstrebungen verstärkt ist.

5. Trägerelement nach einem der Ansprüche 1 bis 4,
**dadurch gekennzeichnet ,**
**dass** das Trägerelement eine Wandstärke von weniger als 3 mm aufweist.

6. Trägerelement nach einem der Ansprüche 1 bis 5,
**dadurch gekennzeichnet ,**
**dass** die metallischen Hohlkugeln untereinander verbunden sind.

## Claims

1. Support element for a vehicle body, in particular for supporting columns, the support element being produced from cast iron,
• and the support element comprises at least one cast shell element,
• which forms the outer contour of the support element and encloses a cavity,
• the cavity is at least partly filled with a core of metallic hollow balls,
**characterized in that**
• a core stack which produces the support element in a negative form comprises a plurality of partial cores,
• at least one inner partial core consisting of hollow balls,
• the support element is cast with an iron alloy, in particular in cast steel, spheroidal graphite cast iron or malleable cast iron,
• the inner partial core of hollow balls being at least partly encapsulated by the iron alloy and
remaining in the support element after demolding.

2. Support element according to Claim 1, **characterized in that** the outer contour of the support element is composed in the form of a lattice structure.

3. Support element according to Claim 2, **characterized in that** the support element comprises at least three longitudinal struts which are connected to one another by transverse struts.

4. Support element according to Claim 1,
**characterized in that**
• the shell element is reinforced in the cavity by strutting.

5. Support element according to one of Claims 1 to 4, **characterized in that** the support element has a wall thickness of less than 3 mm.

6. Support element according to one of Claims 1 to 5, **characterized in that** the metallic hollow balls are connected to one another.

## Revendications

1. Elément de support pour carrosserie de véhicule, notamment pour colonnes portantes, l'élément de support étant constitué de fer coulé,
- et l'élément de support comprenant au moins un élément de coquille coulé,
- qui forme le contour extérieur de l'élément de support et qui entoure un espace creux,
- l'espace creux étant rempli au moins partiellement d'un noyau en billes creuses métalliques,
**caractérisé en ce que**
- un paquet de noyaux, qui constitue l'élément de support dans une forme négative, comprend plusieurs noyaux partiels,
- au moins un noyau partiel interne se composant de billes creuses,
- l'élément de support étant coulé avec un alliage de fer, notamment en acier moulé, en fonte nodulaire ou en fonte malléable,
- le noyau partiel interne en billes creuses étant entouré au moins partiellement par l'alliage de fer et
- subsistant dans l'élément de support après le démoulage.

2. Elément de support selon la revendication 1,
**caractérisé en ce que**
le contour extérieur de l'élément de support est réalisé en forme de construction en charpente.

3. Elément de support selon la revendication 2,
**caractérisé en ce que**
l' élément de support comprend au moins trois longerons, qui sont connectés les uns aux autres par des traverses.

4. Elément de support selon la revendication 1,
**caractérisé en ce que**
- l'élément de coquille est renforcé dans l'espace creux par des entretoises.

5. Elément de support selon l'une quelconque des revendications 1 à 4,
**caractérisé en ce que**
l'élément de support présente une épaisseur de paroi inférieure à 3 mm.

6. Elément de support selon l'une quelconque des revendications 1 à 5,
**caractérisé en ce que**
les billes creuses métalliques sont connectées les unes aux autres.
